# EUROPÄISCHE PATENTSCHRIFT

(11) **EP 1 015 262 B1**
(45) Veröffentlichungstag und Bekanntmachung des Hinweises auf die Patenterteilung: **29.08.2001**
(21) Anmeldenummer: 98943694.4
(22) Anmeldetag: 08.07.1998
(51) Int. Cl.: B60D 1/02, B60D 1/26

(54) **ANHÄNGEKUPPLUNG FÜR FAHRZEUGE**
COUPLING DEVICE FOR VEHICLES
DISPOSITIF D'ATTELAGE TRACTEUR POUR VEHICULES

(30) Priorität: 20.09.1997 DE 19741578
(43) Veröffentlichungstag der Anmeldung: 05.07.2000
(73) Patentinhaber: Ringfeder VBG GmbH, 47807 Krefeld (DE)
(72) Erfinder: NEUMEYER, Frank, D-47805 Krefeld (DE); WENSING, Udo, D-46145 Oberhausen (DE); ROSSBACH, Joachim, D-41747 Viersen (DE); VANDEWEERD, Rolf, D-47447 Moers (DE); SCHÄFER, Horst-Dieter, D-47877 Willich (DE); WEYERSTRASS, Andreas, D-47809 Krefeld (DE); SPRENGER, Susanne, D-47441 Moers (DE); GOLDMANN, Arndt, D-47441 Moers (DE)
(86) Internationale Anmeldenummer: DE9801969
(87) Internationale Veröffentlichungsnummer: WO9915349

(56) Entgegenhaltungen:
- DE-A- 2 458 977
- DE-C- 964 834
- DE-U- 8 021 512
- DE-U- 8 219 259

## Beschreibung

Die Erfindung betrifft eine Anhängekupplung für Fahrzeuge mit einem Kuppelbolzen und einem für das Öffnen der Kupplung durch Anheben des Kuppelbolzens vorgesehenen Betätigungshebel mit einem Seilzug.

Durch die DE-OS 24 58 977 ist eine Anhängekupplung mit den vorgenannten Merkmalen bekannt. Für das Öffnen dieser Kupplung, die an schwieriger zugänglichen Stellen unterhalb des Fahrzeuges und in einem größeren Abstand von dessen Hinterseite montiert sein kann, wird der Kuppelbolzen durch einen Betätigungsarm angehoben, der an einer im Kupplungskörper gelagerten Welle befestigt ist, wobei der von der Kupplung entfernt am Fahrzeug angebrachte Betätigungshebel über den Seilzug am Betätigungsarm angreift. Wenn über die Zugöse des Anhängerfahrzeuges eine größere Längskraft auf den Kuppelbolzen einwirkt oder wenn die Zugöse und der Kuppelbolzen nicht in einem Winkel von 90° zueinander stehen (Mulden bzw. Kuppen) kann die Anhängekupplung nicht wie üblich durch einfache manuelle Bedienung des Betätigungshebels geöffnet werden, weil der Kuppelbolzen dann innerhalb der Zugöse klemmt. In der Praxis verwenden die Fahrer in solchen Fällen häufig Hilfswerkzeuge - beispielsweise einen Hammer oder ein Rohr als Hebelverlängerung - mit der Folge von Beschädigungen des Betätigungsmechanismus der Anhängekupplung oder eines Zerreißens des Seilzuges.

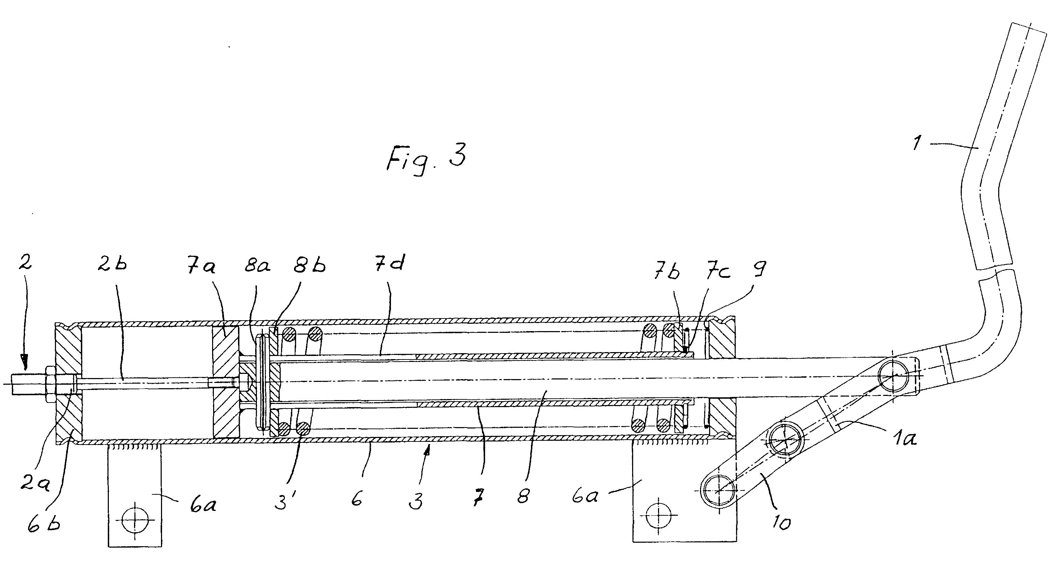

Durch die Druckschrift DE 964 834 C gehört ferner eine Anhängekupplung zum Stand der Technik, bei der - gemäß Fig. 3 und zugehöriger Beschreibung Seite 3, Zeilen 39 bis 52 - innerhalb eines Bowdenzuges, der einen Kuppelbolzen und einen Handhebel miteinander verbindet, eine nicht vorgespannte Zugfeder eingebaut ist. Diese Zugfeder wird bei dem Öffnen der Kupplung stets gespannt, wobei zwangsläufig der Federweg und damit der Weg am Handhebel ungünstig groß ist.

Der Erfindung liegt die Aufgabe zugrunde, eine Anhängekupplung der gattungsgemäßen Art so auszubilden, daß ein zuverlässiges Öffnen der Kupplung auch bei innerhalb der Zugöse klemmendem Kuppelbolzen erreicht wird, wobei der Betätigungsmechanismus der Kupplung und der Seilzug vor Überlastung und Beschädigung geschützt sein sollen.

Diese Aufgabe wird erfindungsgemäß dadurch gelöst, daß innerhalb der Seilzugverbindung zwischen dem Kuppelbolzen und dem Betätigungshebel ein unter Vorspannung stehendes und lediglich bei klemmendem Kupplungsbolzen nach Art eines Federspeichers spannbares Federelement angeordnet ist.

Vorteilhafte Ausgestaltungen der Erfindung sind in den Unteransprüchen angegeben.

Im weiteren wird die Erfindung anhand von Ausführungsbeispielen näher beschrieben, die in der Zeichnung dargestellt sind.

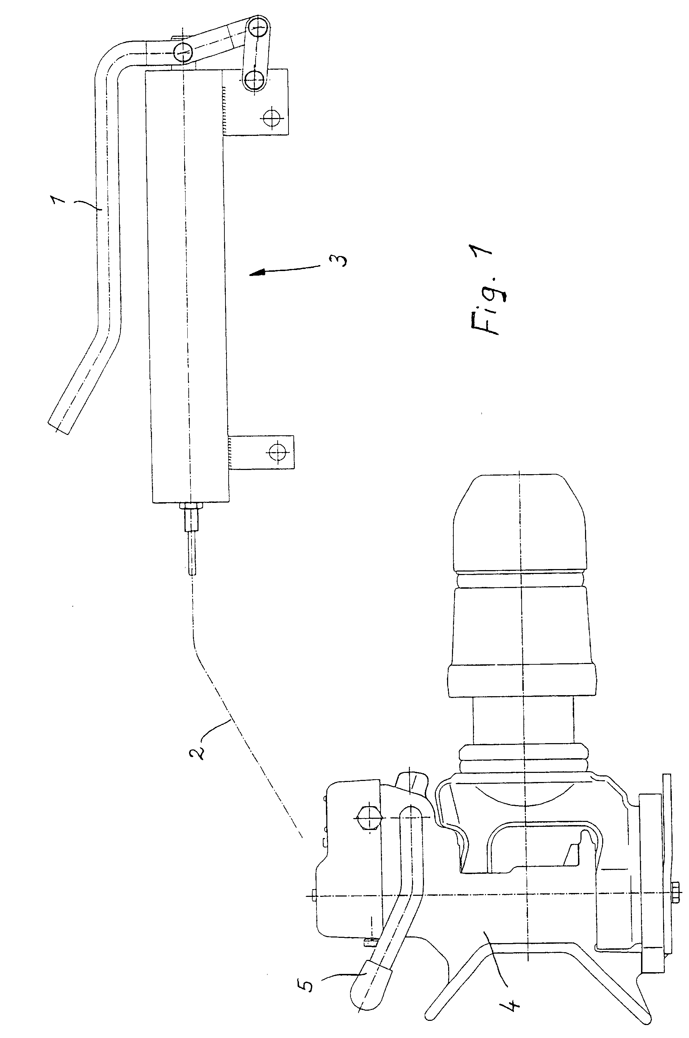

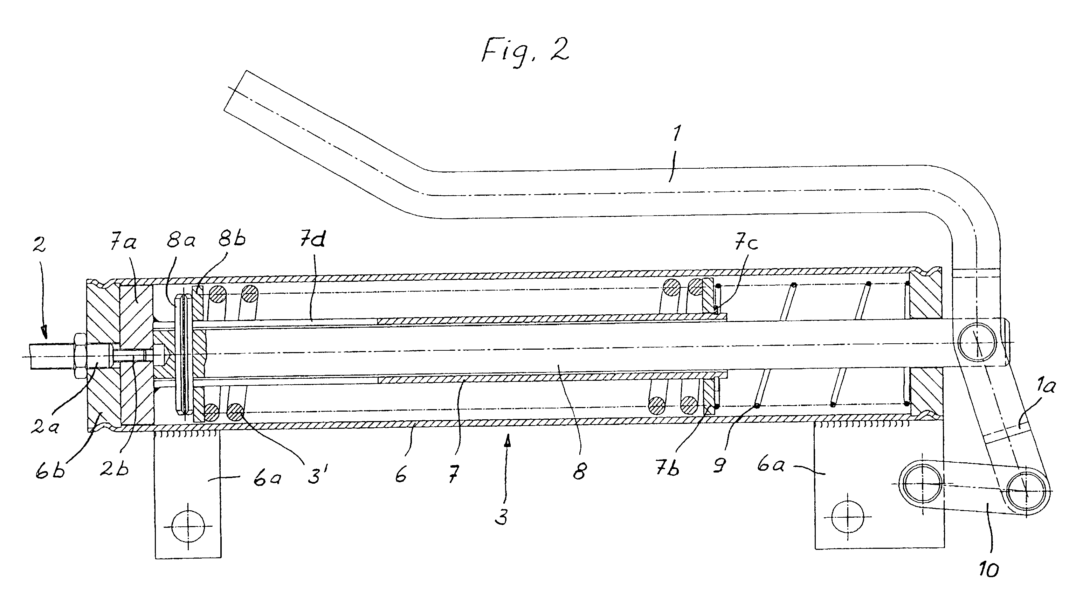

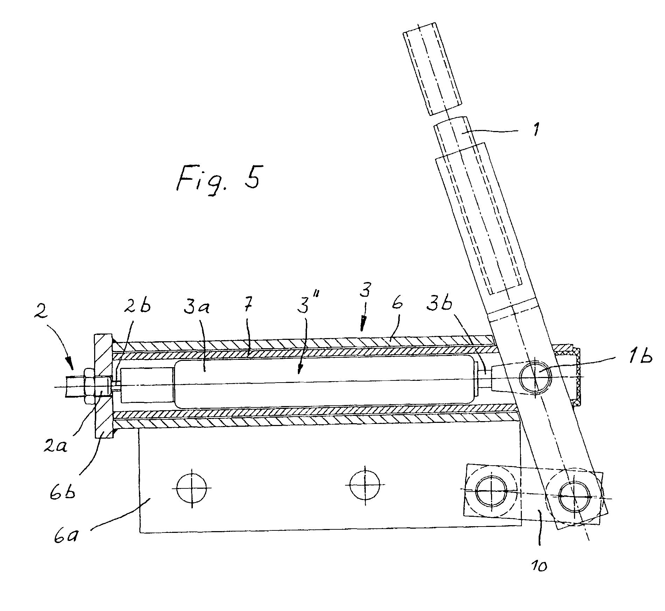

Fig. 1 zeigt eine Anhängekupplung und Bauteile zu deren Fernbetätigung in Seitenansicht. In Fig. 2 bis 4 ist jeweils im Längsschnitt ein mit einer mechanischen Feder ausgerüstetes Federelement in jeweils unterschiedlichen Wirkstellungen dargestellt. Die Fig. 5 bis 7 betreffen ein Federelement, das eine Gasfeder aufweist, wobei ebenfalls unterschiedliche Wirkstellungen vorliegen.

Wie aus Fig. 1 ersichtlich ist, hat die Anhängekupplung einen gängigen Aufbau. Innerhalb des Kupplungskörpers 4 ist der hier nicht dargestellte Kuppelbolzen heb- und senkbar geführt. Für das Öffnen der Kupplung wird der Kuppelbolzen durch einen Betätigungsarm angehoben, der an einer im Kupplungskörper 4 gelagerten und durch einen Handhebel 5 drehbaren Welle befestigt ist. An dem Betätigungsarm (oder an einem anderen beliebig auf der Welle angeordneten Hebel) greift weiter ein Seilzug 2 an, der unter Zwischenschaltung eines nach Art eines Federspeichers spannbaren Federelements 3 mit einem an gut zugänglicher Stelle des Fahrzeuges plazierten Betätigungshebel 1 gekoppelt ist.

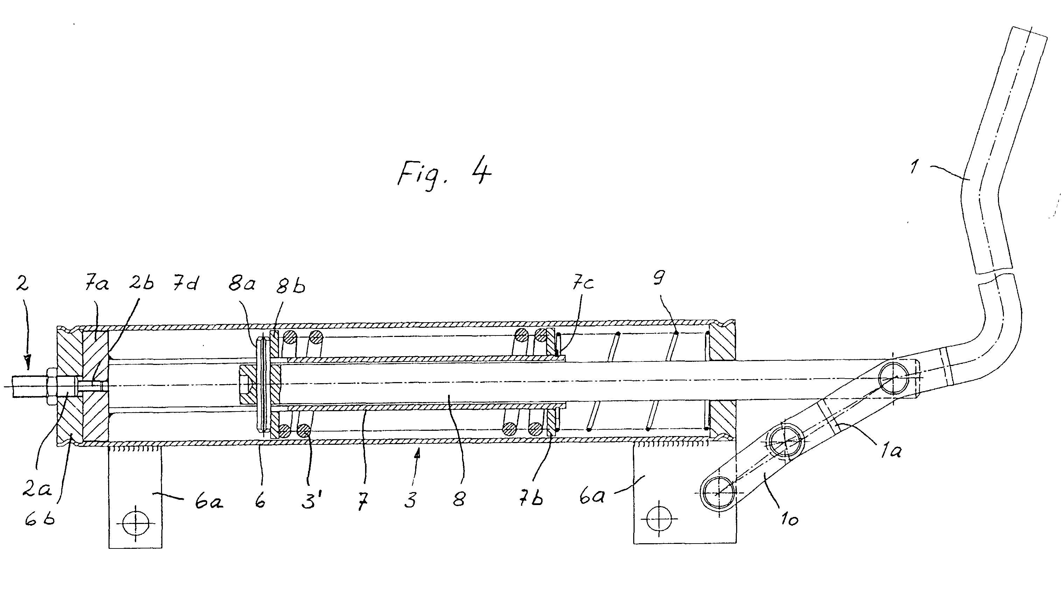

Gemäß dem Ausführungsbeispiel nach Fig. 2 bis 4 ist das Federelement 3 wie folgt gestaltet:
Innerhalb eines zylinderförmigen Gehäuses 6, das mit Befestigungsstücken 6a für ein Anschrauben am Fahrzeug versehen ist, sind eine als Druckfeder arbeitende Schraubenfeder 3', ein Zugrohr 7 mit angeschweißter Zugplatte 7a, eine das Zugrohr 7 durchgreifende Zugstange 8 und eine Rückstellfeder 9 angeordnet. Die Schraubenfeder 3' stützt sich an zwei Scheiben 7b und 8b ab, wobei die eine Scheibe 7b mittels eines Sprengringes 7c gegenüber dem Zugrohr 7 gehalten ist. Die andere Scheibe 8b, die in der Wirkposition nach Fig. 1 gegen die Zugplatte 7a des Zugrohres 7 anliegt, ist mit der Zugstange 8 über einen Spannstift 8a verbunden, der in einem Langloch 7d des Zugrohres 7 längsverschiebbar geführt ist. Der an der Zugstange 8 angreifende Betätigungshebel 1 ist mittels einer Doppellasche 10 an dem in Zeichnungsebene rechten Befestigungsstück 6a des Gehäuses 6 angelenkt. Der Betätigungshebel 1 und die Doppellasche 10 können eine durch einen hebelseitigen Anschlag la begrenzte Stellung über Totpunkt einnehmen (siehe Fig. 3 und 4), wobei diese Stellung eine einfache Arretierung bildet. Der Seilzug 2 ist über seine Seilhülle 2a mit dem Deckel 6b des Gehäuses 6 verbunden; das Zugseil 2b des Seilzuges 2 ist an der Zugplatte 7a des Zugrohres 7 befestigt.

Bei der alternativen Ausbildung des Federelementes 3 nach Fig. 5 bis 7 besteht folgender Aufbau:
Das Gehäuse 6 mit dem Befestigungsstück 6a und dem Deckel 6b, an dem wiederum die Seilhülle 2a des Seilzuges 2 angeschlossen ist, enthält das hier eine Gasfeder 3'' aufnehmende Zugrohr 7, wobei die Gasfeder 3'' als Zugfeder arbeitet. Das Zugseil 2b des Seilzuges 2 greift am Zylinder 3a der Gasfeder 3'' an. Der Betätigungshebel 1 ist durch einen Bolzen 1b sowohl mit dem Zugrohr 7 als auch mit der Kolbenstange 3b der Gasfeder 3'' verbunden. Die Arretierung des Betätigungshebels 1 durch Übertotpunktlage wird in diesem Falle durch eine Hülse 10a der Doppellasche 10 gebildet, die gegen das Zugrohr 7 anliegt.

Fig. 2 und Fig. 5 zeigen jeweils die (1.) Wirkstellung "Kupplung geschlossen", d. h., der Kuppelbolzen durchgreift die Zugöse des Anhängerfahrzeuges.

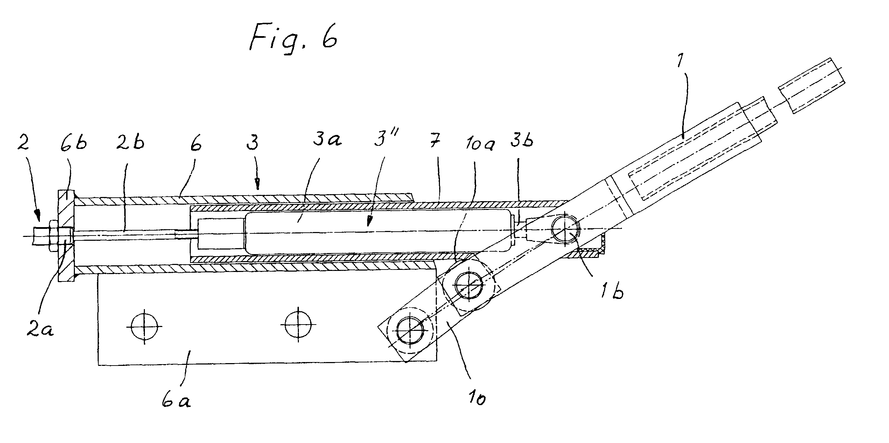

Wenn der Fahrer zum Öffnen der Anhängekupplung den Betätigungshebel 1 nach rechts schwenkt und der Kuppelbolzen nicht in der Zugöse klemmt (Normalfall), ergibt sich die (2.) Wirkstellung "Kupplung geöffnet" gemäß Fig. 3 bzw. Fig. 6. Wie ersichtlich, werden bei der Schwenkbewegung des Betätigungshebels 1 die Zugstange 8, das Zugrohr 7 und die Schraubenfeder 3' (Fig. 4) bzw. das Zugrohr 7 und die Gasfeder 3'' lediglich gegenüber dem Gehäuse 6 verlagert, so daß keine Veränderung der auf die normale Öffnungskraft der Anhängekupplung abgestimmten Vorspannkraft der Feder 3' oder 3'' stattfindet.

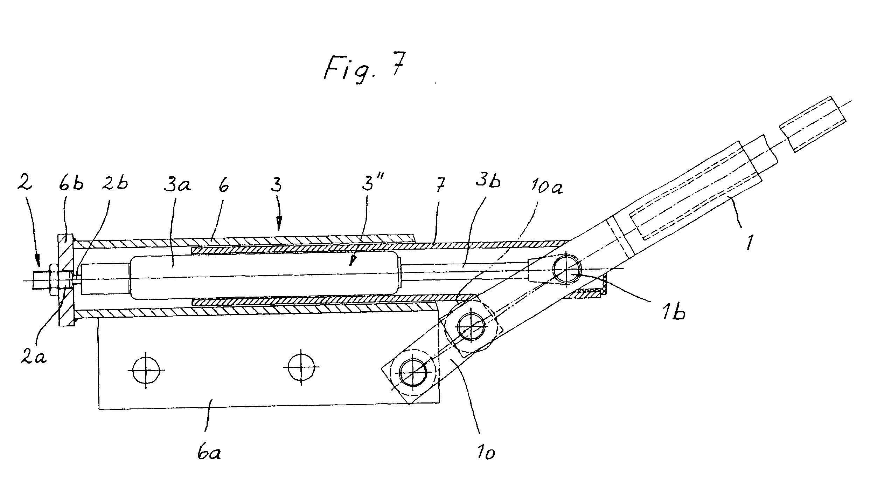

Die weiter mögliche (3.) Wirkstellung "Kupplung geschlossen - Kuppelbolzen klemmt in der Zugöse" ist in Fig. 4 und in Fig. 7 gezeigt. Hierbei spannt der Fahrer durch den Betätigungshebel 1 die Schraubenfeder 3' oder die Gasfeder 3" über deren Vorspannkraft hinaus, so daß diese vergrößerte Federkraft in Zugrichtung auf das Zugseil 2b des Seilzuges 2 und damit auf den Kuppelbolzen wirksam ist. Diese Federkraft löst den Kuppelbolzen aus seiner klemmenden Verbindung mit der Zugöse, wenn das Fahrzeug beispielsweise durch Ruckeln leicht bewegt wird. Dabei entspannt sich die Schraubenfeder 3' oder die Gasfeder 3'', so daß das Federelement 3 letztlich die (2.) Wirkstellung nach Fig. 3 bzw. 6 einnimmt.

Die im Federelement 3 nach Fig. 2 bis 4 vorgesehene Rückstellfeder 9 unterstützt eine im Kupplungskörper 4 in aller Regel enthaltene Feder bei dem Schließen der Anhängekupplung.

Eine nicht dargestellte Ausführungsform der Erfindung liegt darin, als Federelement 3 einen Pneumatikzylinder einzusetzen, der mit der fahrzeugseitigen Luftanlage gekoppelt ist.

### Liste der Bezugszeichen

- 1: Betätigungshebel
- 1a: Anschlag
- 1b: Bolzen
- 2: Seilzug
- 2a: Seilhülle
- 2b: Zugseil
- 3: Federelement
- 3': Schraubenfeder
- 3 ' ': Gasfeder
- 3a: Zylinder
- 3b: Kolbenstange
- 4: Kupplungskörper
- 5: Handhebel
- 6: Gehäuse
- 6a: Befestigungsstück
- 6b: Deckel
- 7: Zugrohr
- 7a: Zugplatte
- 7b: Scheibe
- 7c: Sprengring
- 7d: Langloch
- 8: Zugstange
- 8a: Spannstift
- 8b: Scheibe
- 9: Rückstellfeder
- 10: Doppellasche
- 10a: Hülse

## Patentansprüche

1. Anhängekupplung für Fahrzeuge mit einem Kuppelbolzen und einem für das Öffnen der Kupplung durch Anheben des Kuppelbolzens vorgesehenen Betätigungshebel (1) mit einem Seilzug (2), **dadurch gekennzeichnet**, daß innerhalb der Seilzugverbindung zwischen dem Kuppelbolzen und dem Betätigungshebel (1) ein unter Vorspannung stehendes und lediglich bei klemmendem Kupplungsbolzen nach Art eines Federspeichers spannbares Federelement (3) angeordnet ist.

2. Anhängekupplung nach Anspruch 1, **dadurch gekennzeichnet**, daß das Federelement (3) eine mechanische Feder enthält, vorzugsweise eine Schraubenfeder (3').

3. Anhängekupplung nach Anspruch 1, **dadurch gekennzeichnet,** daß das Federelement (3) eine Gasfeder (3'') aufweist.

## Claims

1. A trailer coupling for vehicles having a coupling pin and an actuating lever (1) with a traction cable (2) provided for opening the coupling by lifting the coupling pin, **characterized in that** a pre-stressed spring member (3), stressable in the manner of a spring accumulator only when the coupling pin is clamped, is arranged inside the traction-cable connexion between the coupling pin and the actuating lever (1).

2. A trailer coupling according to Claim 1, **characterized in that** the spring member (3) contains a mechanical spring, preferably a helical spring (3').

3. A trailer coupling according to Claim 1, **characterized in that** the spring member (3) comprises a gas spring (3").

## Revendications

1. Dispositif d'attelage tracteur pour véhicules, comprenant un axe d'attelage et un levier d'actionnement (1) avec une commande par câble, qui est prévu pour ouvrir l'attelage en soulevant l'axe d'attelage, **caractérisé en ce qu**'à l'intérieur de la commande par câble, entre l'axe d'attelage et le levier d'actionnement (1), est disposé un élément à ressort (3) précontraint et ne pouvant être tendu à la manière d'un ressort accumulateur qu'en bloquant l'axe d'attelage.

2. Dispositif d'attelage tracteur selon la revendication 1, **caractérisé en ce que** l'élément à ressort (3) contient un ressort mécanique, de préférence un ressort cylindrique (3').

3. Dispositif d'attelage tracteur selon la revendication 1, **caractérisé en ce que** l'élément à ressort (3) comprend un ressort pneumatique (3").
